# EUROPÄISCHE PATENTSCHRIFT

(11) **EP 2 458 149 B1**
(45) Veröffentlichungstag und Bekanntmachung des Hinweises auf die Patenterteilung: **08.04.2020**
(21) Anmeldenummer: 10193067.5
(22) Anmeldetag: 30.11.2010
(51) Int. Cl.: F01D 5/14

(54) **Flugtriebwerk-Beschaufelung**
Aircraft engine blades
Aubage pour turboréacteur

(43) Veröffentlichungstag der Anmeldung: 30.05.2012
(73) Patentinhaber: MTU Aero Engines AG, 80995 München (DE)
(72) Erfinder: Hübner, Norbert, 85221, Dachau (DE)

(56) Entgegenhaltungen:
- EP-A2- 0 937 862
- DE-A1-102008 031 781
- US-A- 5 480 285
- LEE S W ET AL: "Effects of incidence angle on endwall convective transport within a high-turning turbine rotor passage", INTERNATIONAL JOURNAL OF HEAT AND MASS TRANSFER, PERGAMON PRESS, GB, vol. 52, no. 25-26, 1 December 2009 (2009-12-01), pages 5922-5931, XP026693967, ISSN: 0017-9310, DOI: 10.1016/J.IJHEATMASSTRANSFER.2009.07.015 [retrieved on 2009-09-11]
- Soo-Yong Cho ET AL: "A STUDY OF 2-D TURBINE BLADE PROFILE TO MINIMIZE THE PRESSURE LOSS", Proceedings of ICFDP7: Seventh International Conference on Fluid Dynamics and Propulsion December 18-20, 2001, vol. 7, 18 December 2001 (2001-12-18), - 20 December 2001 (2001-12-20), pages 1-6, XP55281369, ASME

## Beschreibung

Die Erfindung betrifft eine Beschaufelung für eine Gasturbine eines Flugtriebwerk, nach dem Oberbegriff des Anspruchs 1.

Bei der Auslegung von Turbinenbeschaufelungen von Flugtriebwerken sind diverse konkurrierende Anforderungen zu berücksichtigen. So soll insbesondere bei geringem Gewicht und geringer Lärmentwicklung ein hoher Wirkungsgrad erzielt werden. Die verschiedensten Beschaufelungsparameter beeinflussen sich dabei gegenseitig oftmals hochgradig nichtlinear, so dass eine entsprechende Optimierung analytisch kaum möglich ist.

Aus der EP 0 937 862 A2 ist ein Schaufelgitter für eine Fluggas-Axialturbine bekannt. Aus der Druckschrift geht ein Teilungsverhältniss hervor, welches wenigstens 1,0 beträgt.

Die US 5,480,285 betrifft Laufschaufeln für Dampfturbinen.

Aufgabe der vorliegenden Erfindung ist es, eine verbesserte Beschaufelung zur Verfügung zu stellen.

Diese Aufgabe wird durch eine Beschaufelung mit den Merkmalen des Anspruchs 1 gelöst. Vorteilhafte Weiterbildungen sind Gegenstand der Unteransprüche.

Als Beschaufelung im Sinne der vorliegenden Erfindung wird insbesondere eine Anordnung von Laufschaufeln und/oder eine Anordnung von Leitschaufeln, insbesondere einer oder mehrerer Stufen, bezeichnet. Eine erfindungsgemäße Beschaufelung ist besonders für schnelllaufende Gasturbinen, insbesondere schnelllaufende Niederdruckgasturbinen, in Flugtriebwerken geeignet. In einer bevorzugten Ausführung weist ein Flugtriebwerk eine erfindungsgemäße Beschaufelung auf.

Einige oder alle Schaufeln der Beschaufelung, also insbesondere einige oder alle Leit- und/oder Laufschaufeln einer oder mehrerer Stufen, weisen in einem spitzennahen Schnitt ein Teilungsverhältnis auf, welches wenigstens 0,70 und insbesondere wenigstens 0,9 beträgt.

Als spitzennaher Schnitt wird vorliegend insbesondere ein Schnitt bezeichnet, der in der Nähe der Schaufelspitzen der Laufschaufeln, d.h. radial außen, liegt oder als TIP-Schnitt die Schaufelspitze bildet. Als fußnaher Schnitt wird entsprechend insbesondere ein Schnitt bezeichnet, der in der Nähe der Schaufelfüße der Laufschaufeln, d.h. radial innen, liegt oder den Schaufelfuß definiert. Insbesondere wird im Sinne der vorliegenden Erfindung ein Schnitt, der radial oberhalb einer Mitte einer radialen Schaufelhöhe liegt, und bevorzugt ein Schnitt im Bereich zwischen 95% und 100% der Laufschaufelhöhe als spitzennaher Schnitt bezeichnet, ein Schnitt, der radial unterhalb dieser Schaufelhöhemitte und bevorzugt im Bereich zwischen 0% und 5% der Laufschaufelhöhe liegt, entsprechend als fußnaher Schnitt. Sowohl bei Lauf- als auch bei Leitschaufeln liegt ein spitzennaher Schnitt entsprechend radial weiter von einer Rotationsachse des Turbinenrotors entfernt als die Schaufelhöhemitte, die ihrerseits radial weiter von der Rotationsachse entfernt ist als ein fußnaher Schnitt. Ein Schnitt im Sinne der vorliegenden Erfindung kann insbesondere auf radial konstanter Höhe oder längs einer Stromlinie liegen, d.h. bei konvergentem oder divergente Strömungskanal radial nach innen bzw. außen verlaufen. Als Schaufelfuß wird vorliegend insbesondere die untere Begrenzung des Schaufelblattes bezeichnet, die sogenannte Plattform, während ein sich gegebenenfalls anschließender Befestigungsbereich, der gelegentlich ebenfalls als Schaufelfuß bezeichnet wird, nicht betrachtet wird, da die vorliegenden Erfindung sich mit einer Optimierung des Schaufelblattes und der durch dieses beeinflussten Strömung befasst.

Als Teilungsverhältnis wird in fachüblicher Weise insbesondere der Quotient aus einer Schaufelteilung, d.h. dem Abstand zweier Schaufeln in Umfangsrichtung, dividiert durch die Sehnenlänge der Schaufeln zwischen Schaufelvorder- und -hinterkante verstanden.

Das Teilungsverhältnis in einem spitzennahen Schnitt einiger oder aller Schaufeln der Beschaufelung, also insbesondere einiger oder aller Leit- und/oder Laufschaufeln einer oder mehrerer Stufe, beträgt höchstens 0,97, insbesondere höchstens 0,95. Diese bevorzugten Ober- und Untergrenzen für das Teilungsverhältnis ergeben zusammen mit den nachfolgend erläuterten erfindungsgemäßen Parametern besonders leichte und/oder geräuscharme Beschaufelungen mit hohen Wirkungsgraden für Flugtriebwerke.

Gemäß der vorliegenden Erfindung beträgt ein Abströmwinkel einiger oder aller Schaufeln der Beschaufelung, also insbesondere einiger oder aller Leit- und/oder Laufschaufeln einer oder mehrerer Stufen, höchstens 167°, vorzugsweise höchstens 165°, und wenigstens 155°, vorzugsweise wenigstens 160°.

Als Abströmwinkel wird dabei in fachüblicher Weise insbesondere der größere der beiden Komplementärwinkel zwischen der theoretischen Abströmgeschwindigkeit bzw. der Tangente an die Saug- oder Druckseite an der Schaufelhinterkante einerseits und dem Beschaufelungsumfang bzw. einer Normalebene zur Rotationsachse der Turbine andererseits verstanden. Die erfindungsgemäßen Ober- und Untergrenzen beziehen sich dabei auf den Betrag des Abströmwinkels, d.h. ohne Berücksichtigung der Orientierung zwischen Dreh- und Abströmrichtung.

Subtrahiert man von dem erfindungsgemäß angegebenen Abströmwinkel 90°, so ergibt sich der Winkel zwischen der theoretischen Abströmgeschwindigkeit bzw. der Tangente an die Saug- oder Druckseite an der Schaufelhinterkante einerseits und der Rotationsachse der Turbine andererseits, der gelegentlich ebenfalls als Abströmwinkel definiert wird. Dieser abweichend definierte Abströmwinkel beträgt gemäß dem ersten Aspekt der vorliegenden Erfindung entsprechend höchstens 77°, vorzugsweise höchstens 75°, und wenigstens 65°, vorzugsweise wenigstens 70°.

Gemäß der vorliegenden Erfindung beträgt ein Beschleunigungsverhältnis wenigstens 1,4 und insbesondere wenigstens 1,5. Als Beschleunigungsverhältnis wird in fachüblicher Weise insbesondere der Quotient des Betrags der theoretischen Abströmgeschwindigkeit dividiert durch den Betrag der theoretischen Anströmgeschwindigkeit verstanden. Es kann beispielsweise aus der Massenkontinuitätsbedingung für die Kanalquerschnitte zwischen benachbarten Schaufeln zwischen Kanaleintritt und Kanalaustritt, d.h. dem engsten Kanalquerschnitt, abgeschätzt werden.

Das Beschleunigungsverhältnis kann über die radiale Schaufelhöhe konstant sein. In einer bevorzugten Ausführung beträgt es jedoch in einem fußnahen Schnitt bzw. an der Nabe wenigstens 1,4, insbesondere wenigstens 1,5, und ist in einem spitzennahen Schnitt größer als in diesem fußnahen Schnitt,.vergrößert sich insbesondere in Richtung zu einem spitzennahen Schnitt hin, vorzugsweise um einen Faktor, der größer oder gleich 2 ist.

Die theoretische An- bzw. Abströmgeschwindigkeit ergibt sich aus der Schaufelgeometrie und den strömungstechnischen Randbedingungen, insbesondere Auslegungs-, Normal- oder Referenzbetriebspunkten. Dabei kann die theoretische An- bzw. Abströmgeschwindigkeit die vektorielle Geschwindigkeit einschließlich einer Radialkomponente oder auch nur die Axial- und Umfangskomponente einer dreidimensionalen Strömung bezeichnen, die theoretische An- bzw. Abströmgeschwindigkeit kann also zwei (axial, umfangsrichtungs-) oder drei (radial, axial und umfangsrichtungs-) Komponenten aufweisen.

Durch die erfindungsgemäße Parameterkombination von Ober- und Untergrenze für das Teilungsverhältnis, des Abströmwinkels und des Beschleunigungsverhältnisses, kann eine gleichermaßen leichte und/oder geräuscharme Beschaufelung mit hohem Wirkungsgrad insbesondere in einer schnelllaufenden Niederdruckturbine(nstufe) zur Verfügung gestellt werden.

In einer bevorzugten Ausführung weisen einige oder alle Laufschaufeln einer oder mehrerer Stufen in einem spitzennahen Schnitt eine maximale Profildicke auf, die höchstens 2,5 mm und bevorzugt höchstens 2 mm beträgt, wenn diese Laufschaufeln als Vollschaufeln ausgebildet sind. Für Hohlschaufeln beträgt eine maximale Profildicke in einem spitzennahen Schnitt vorzugsweise wenigstens 4,5 mm und bevorzugt wenigstens 4 mm. Damit kann bei ausreichender Festigkeit unter Berücksichtigung der Belastungsfähigkeit des Schaufelwerkstoffes in Abhängigkeit von der Materialtemperatur eine leichte Beschaufelung dargestellt werden.

Vorzugsweise weisen einige oder alle Leitschaufeln einer oder mehrerer Stufen in einem spitzennahen Schnitt eine maximale Profildicke von höchstens 10 mm und bevorzugt höchstens 9 mm auf. Vorteilhafterweise sind die Leitschaufeln als Vollschaufeln ausgebildet. Die Begrenzung der maximalen Profildicke trägt der Thermoermüdung vorteilhaft Rechnung.

In einer bevorzugten Ausführung weisen einige oder alle Laufschaufeln einer oder mehrerer Stufen wenigstens eine Dichtspitze, vorzugsweise je zwei oder mehr Dichtspitzen auf. Vorteilhafterweise ist radial den Spitzen gegenüberliegend ein Anlaufbelag am Turbinengehäuse angeordnet.

Vorzugsweise beträgt der Reaktionsgrad einer erfindungsgemäßen Beschaufelung wenigstens 0,35 und bevorzugt wenigstens 0,4. Zusätzlich oder alternativ beträgt der Reaktionsgrad höchstens 0,6 und bevorzugt höchstens 0,55. Als Reaktionsgrad kann dabei in fachüblicher Weise insbesondere das Verhältnis der Enthalpie, die in den Laufschaufeln einer Turbinenstufe in Strömungsenergie und mechanische Arbeit umgesetzt wird, zum gesamten, insbesondere isentropen, Enthalpiegefälle der Turbinenstufe, definiert werden. Gleichermaßen kann der Reaktionsgrad im Sinne der vorliegenden Erfindung durch den sogenannten Druck-Reaktionsgrad definiert sein, der das Verhältnis der spezifischen Strömungsarbeit im Rotor zur spezifischen Strömungsarbeit zwischen Ein- und Austritt der Stufe angibt. Je nach Approximation der statischen Zustandsänderung durch eine Polytrope oder Isentrope und Isobare kann es sich hierbei insbesondere um den polytropen bzw. den isotropen Druck-Reaktionsgrad handeln. Vorzugsweise wird der Reaktionsgrad mit den statischen Drücken gebildet und ergibt sich als Quotient aus der Differenz des statischen Druckes im Laufgitter dividiert durch der Differenz des statischen Druckes in der gesamten Stufe aus Leit- und Laufgitter.

In einer bevorzugten Ausführung sind die Profilschnitte radial über den Schwerpunkt gefädelt, was eine auslegungs-, strömungs- und strukturmechanisch günstige Beschaufelung ergibt. Dabei wird auch ein leichter axialer Versatz der Profilschnitte, d.h. eine axial leicht geschrägte Schaufel, als radial über den Schwerpunkt gefädelt im Sinne der vorliegenden Erfindung verstanden.

Vorzugsweise trifft eine theoretische Staupunktstromlinie im Bereich des Vorderkantenradius auf das Schaufelprofil. Die theoretische Staupunktstromlinie wird insbesondere durch die im Staupunkt endende Stromlinie in einer theoretischen Auslegungsströmung definiert.

In einer bevorzugten Ausführung beträgt die Umlauffrequenz von Laufschaufeln der Beschaufelung in einem oder mehreren Lärmarbeitspunkten wenigstens 6000 Hz, insbesondere wenigstens 6300 Hz. Aus der Nenndrehzahl in einem Lärmarbeitspunkt und der Mindestumlauffrequenz ergibt sich die minimal erforderliche Laufschaufelzahl einer solchen bevorzugten Ausführung. Ein Lärmarbeitspunkt für ein Flugtriebwerk kann in fachüblicher Weise in einem Lastenheft definiert sein und insbesondere eine Flughöhe, Geschwindigkeit und dergleichen vorgeben.

Weitere Merkmale und Vorteile ergeben sich aus den Unteransprüchen und dem Ausführungsbeispiel. Hierzu zeigt, teilweise schematisiert:
- Fig. 1: einen Teil eines Axialschnittes einer Beschaufelung gemäß einer Ausführung der vorliegenden Erfindung;
- Fig. 2: einen Teil einer Abwicklung von Laufschaufelschnitten einer Beschaufelung gemäß einer Ausführung der vorliegenden Erfindung; und
- Fig. 3: einen Teil einer Abwicklung von Leitschaufelschnitten einer Beschaufelung gemäß einer Ausführung der vorliegenden Erfindung.

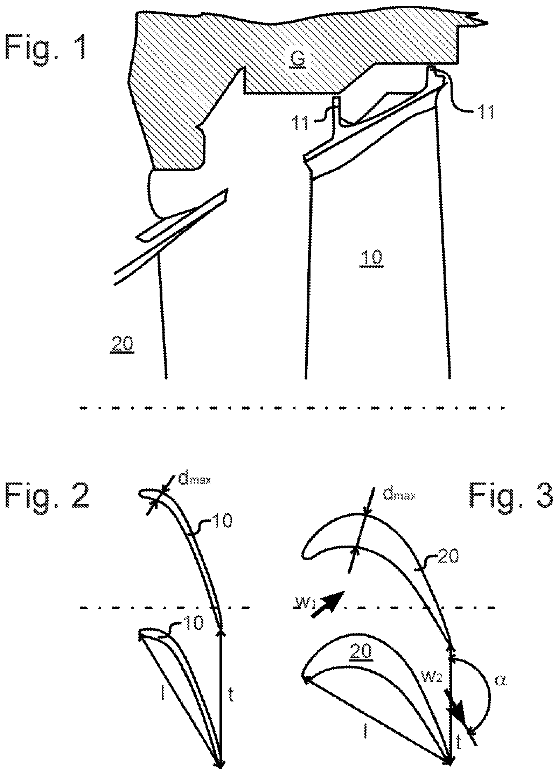

Fig. 1 zeigt im Axialschnitt durch eine strichpunktiert angedeutete Rotationsachse einen Teil einer Laufschaufel 10 mit zwei Dichtspitzen 11, die einem Anlaufbelag eines Turbinengehäuses G gegenüberliegen, sowie einen Teil einer vorhergehenden Leitschaufel 20. Es handelt sich um eine schnelllaufende Niederdruckturbine eines nicht weiter dargestellten Flugtriebwerkes.

Fig. 2, 3 zeigen eine Abwicklung von Lauf- (Fig. 2) bzw. Leitschaufelschnitten (Fig. 3) in Umfangsrichtung. Wiederum ist strichpunktiert die Rotationsachse der Turbine angedeutet, die Umfangsrichtung verläuft entsprechend vertikal in Fig. 2, 3.

In Fig. 2 sind am Beispiel der Leitschaufeln 20 die Teilung t, d.h. der Abstand zwischenbenachbarten Schaufeln in Umfangsrichtung, die Sehnenlänge 1 zwischen der Schaufelvorder- und - hinterkante, sowie die maximale Profildicke dₘₐₓ angedeutet, in Fig. 3 am Beispiel der Laufschaufeln 10 die theoretische Anströmgeschwindigkeit w₁, Abströmgeschwindigkeit w₂ sowie der durch diese gegen die Umfangsrichtung definierte Abströmwinkel. Es kann sich gleichermaßen um einen spitzennahen Schnitt, insbesondere einen TIP-Schnitt (oben in Fig. 1), oder einen fußnahen Schnitt handeln.

Im Ausführungsbeispiel weisen die Leit- und Laufschaufeln 10, 20 in einem spitzennahen Schnitt ein Teilungsverhältnis t/l von 0,92 auf. Der Abströmwinkel α beträgt höchstens 162°, die maximale Profildicke dₘₐₓ der Laufschaufeln 10 zwei Millimeter, die der Leitvollschaufeln 20 neun Millimeter.

Das Beschleunigungsverhältnis w₂/w₁ beträgt in einem fußnahen Schnitt 1,5 nimmt radial zu dem oben genannten spitzennahen Schnitt hin zu.

Der Reaktionsgrad der Beschaufelung über der Schaufelhöhe beträgt 0,5. Die Profilschnitte der Laufschaufeln sind radial über den Schwerpunkt gefädelt (nicht dargestellt).

### Bezugszeichenliste

- 10: Laufschaufel
- 11: Dichtspitze
- 20: Leitschaufel
- G: Gehäuse
- l: Sehnenlänge
- t: Schaufelteilung
- w: Strömungsgeschwindigkeit
- α: Abströmwinkel

## Patentansprüche

1. Beschaufelung (10; 20) für eine Gasturbine eines Flugtriebwerk, wobei die Schaufeln der Beschaufelung in einem spitzennahen Schnitt ein Teilungsverhältnis (t/l) aufweisen, welches wenigstens 0,70, insbesondere wenigstens 0,9, beträgt, **dadurch gekennzeichnet, dass** das Teilungsverhältnis (t/l) höchstens 0,97, insbesondere höchstens 0,95, beträgt, dass ein Abströmwinkel (α) höchstens 167°, insbesondere höchstens 165°, und wenigstens 155°, insbesondere wenigstens 160°, beträgt; und dass ein Beschleunigungsverhältnis (w₂/ w₁) wenigstens 1,4, insbesondere wenigstens 1,5 beträgt.

2. Beschaufelung nach Anspruch 1, **dadurch gekennzeichnet, dass** Laufschaufeln (10) der Beschaufelung als Vollschaufeln ausgebildet sind und in einem spitzennahen Schnitt eine maximale Profildicke (dₘₐₓ) von höchstens 2,5 mm, insbesondere höchstens 2 mm, aufweisen, oder als Hohlschaufeln ausgebildet sind und in einem spitzennahen Schnitt eine maximale Profildicke (dₘₐₓ) von mindestens 4,5 mm, insbesondere mindestens 4 mm, aufweisen.

3. Beschaufelung nach einem der vorhergehenden Ansprüche, **dadurch gekennzeichnet, dass** Leitschaufeln (20) der Beschaufelung in einem spitzennahen Schnitt eine maximale Profildicke (dₘₐₓ) von höchstens 10 mm, insbesondere höchstens 9 mm, aufweisen.

4. Beschaufelung nach einem der vorhergehenden Ansprüche, **dadurch gekennzeichnet, dass** ein Beschleunigungsverhältnis (w₂/ w₁) in einem fußnahen Schnitt wenigstens 1,4, insbesondere wenigstens 1,5 beträgt, und in einem spitzennahen Schnitt größer ist als in diesem fußnahen Schnitt.

5. Beschaufelung nach einem der vorhergehenden Ansprüche, **dadurch gekennzeichnet, dass** Laufschaufeln (10) der Beschaufelung je wenigstens eine, insbesondere zwei oder mehr Dichtspitzen (11) aufweisen.

6. Beschaufelung nach einem der vorhergehenden Ansprüche, **dadurch gekennzeichnet, dass** ihr Reaktionsgrad wenigstens 0,35, insbesondere wenigstens 0,4, und/oder höchstens 0,6, insbesondere höchstens 0,55 beträgt.

7. Beschaufelung nach einem der vorhergehenden Ansprüche, **dadurch gekennzeichnet, dass** die Profilschnitte radial über den Schwerpunkt gefädelt sind.

8. Beschaufelung nach einem der vorhergehenden Ansprüche, **dadurch gekennzeichnet, dass** eine Staupunktstromlinie auf die Schaufelvorderkante im Bereich des Vorderkantenradius auf das Schaufelprofil trifft.

9. Beschaufelung nach einem der vorhergehenden Ansprüche, **dadurch gekennzeichnet, dass** die Umlauffrequenz von Laufschaufeln (10) der Beschaufelung in einem Lärmarbeitspunkt wenigstens 6000 Hz, insbesondere wenigstens 6300 Hz beträgt.

10. Flugtriebwerk mit einer Beschaufelung nach einem der vorhergehenden Ansprüche, **dadurch gekennzeichnet, dass** die Beschaufelung in einer schnelllaufenden Niederdruckturbine angeordnet ist.

## Claims

1. Blading (10; 20) for a gas turbine of an aircraft engine, the blades of the blading having a distribution ratio (t/l) in a section close to the tip which is at least 0.70, in particular at least 0.9, **characterized in that** the distribution ratio (t/l) is at most 0.97, in particular at most 0.95, **in that** a downstream flow angle (α) is at most 167°, in particular at most 165°, and at least 155°, in particular at least 160°; and **in that** an acceleration ratio (w₂/w₁) is at least 1.4, in particular at least 1.5.

2. Blading according to claim 1, **characterized in that** rotor blades (10) of the blading are designed as solid blades and have a maximum profile thickness (dₘₐₓ) of at most 2.5 mm, in particular at most 2 mm, in a section close to the tip, or are designed as hollow blades and have a maximum profile thickness (dₘₐₓ) of at least 4.5 mm, in particular at least 4 mm, in a section close to the tip.

3. Blading according to either of the preceding claims, **characterized in that** guide vanes (20) of the blading have a maximum profile thickness (dₘₐₓ) of at most 10 mm, in particular at most 9 mm, in a section close to the tip.

4. Blading according to any of the preceding claims, **characterized in that** an acceleration ratio (w₂/w₁) is at least 1.4, in particular at least 1.5, in a section close to the base, and is greater in a section close to the tip than in this section close to the base.

5. Blading according to any of the preceding claims, **characterized in that** rotor blades (10) of the blading each have at least one, in particular two or more, sealing tips (11).

6. Blading according to any of the preceding claims, **characterized in that** the degree of reaction thereof is at least 0.35, in particular at least 0.4, and/or at most 0.6, in particular at most 0.55.

7. Blading according to any of the preceding claims, **characterized in that** the profile sections are threaded radially over the center of gravity.

8. Blading according to any of the preceding claims, **characterized in that** a stagnation point streamline to the blade leading edge meets the blade profile in the region of the leading edge radius.

9. Blading according to any of the preceding claims, **characterized in that** the rotational frequency of rotor blades (10) of the blading in a noise operating point is at least 6000 Hz, in particular at least 6300 Hz.

10. Aircraft engine comprising blading according to any of the preceding claims, **characterized in that** the blading is arranged in a high-speed low-pressure turbine.

## Revendications

1. Aubage (10 ; 20) pour une turbine à gaz d'un turboréacteur, dans lequel les aubes de l'aubage présentent un rapport de division (t/l) dans une coupe proche de la pointe, lequel est au minimum de 0,70, en particulier au minimum de 0,9, **caractérisé en ce que** le rapport de division (t/l) est au maximum de 0,97, en particulier au maximum de 0,95, qu'un angle de fuite (α) est au maximum de 167°, en particulier au maximum de 165°, et au minimum de 155°, en particulier au minimum de 160° ; et
qu'un rapport d'accélération (w₂/w₁) est au minimum de 1,4, en particulier au minimum de 1,5.

2. Aubage selon la revendication 1, **caractérisé en ce que** les aubes mobiles (10) de l'aubage sont conçues comme des aubes pleines et présentent dans une coupe proche de la pointe une épaisseur de profil maximale (dₘₐₓ) au maximum de 2,5 mm, en particulier au maximum de 2 mm, ou sont conçues comme des aubes creuses et présentent dans une coupe proche de la pointe une épaisseur de profil maximale (dₘₐₓ) au minimum de 4,5 mm, en particulier au minimum de 4 mm.

3. Aubage selon l'une des revendications précédentes, **caractérisé en ce que** les aubes directrices (20) de l'aubage présentent dans une coupe proche de la pointe une épaisseur de profil maximale (dₘₐₓ) au maximum de 10 mm, en particulier au maximum de 9 mm.

4. Aubage selon l'une des revendications précédentes, **caractérisé en ce qu'**un rapport d'accélération (w₂/w₁) dans une coupe proche du pied est au minimum de 1,4, en particulier au minimum de 1,5, et dans une coupe proche de la pointe est supérieure à dans cette coupe proche du pied.

5. Aubage selon l'une des revendications précédentes, **caractérisé en ce que** les aubes mobiles (10) de l'aubage présentent chacune au minimum un, en particulier deux ou plusieurs embouts d'étanchéité (11).

6. Aubage selon l'une des revendications précédentes, **caractérisé en ce que** son degré de réaction est au minimum de 0,35, en particulier au minimum de 0,4, et/ou au maximum de 0,6, en particulier au maximum de 0,55.

7. Aubage selon l'une des revendications précédentes, **caractérisé en ce que** les coupes de profil sont insérées radialement sur le centre de gravité.

8. Aubage selon l'une des revendications précédentes, **caractérisé en ce qu'**une ligne de courant de point de stagnation rencontre le profil d'aube sur le bord d'attaque d'aube dans la région du rayon de bord d'attaque.

9. Aubage selon l'une des revendications précédentes, **caractérisé en ce que** la fréquence de rotation des aubes mobiles (10) de l'aubage atteint au minimum 6 000 Hz en un point d'exposition au bruit, en particulier au minimum 6 300 Hz.

10. Turboréacteur avec un aubage selon l'une des revendications précédentes, **caractérisé en ce que** l'aubage est disposé dans une turbine basse pression à grande vitesse.
